**Europäisches Patentamt**

**European Patent Office**

**Office européen des brevets**

(19)

(11) **EP 1 166 633 A1**

(12) # EUROPEAN PATENT APPLICATION

(43) Date of publication:
**02.01.2002 Bulletin 2002/01**

(51) Int Cl.⁷: **A21C 9/04**, A21C 9/08

(21) Application number: **00113093.9**

(22) Date of filing: **27.06.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Dziugys, Steponas**<br>  **3031 Kaunas (LT)**<br>• **Stasytis, Algimantas**<br>  **3031 Kaunas (LT)** |
| (71) Applicant: **Kraft Foods R&D, Inc.**<br>**81737 Munich (DE)** | (74) Representative: **HOFFMANN - EITLE**<br>**Patent- und Rechtsanwälte Arabellastrasse 4**<br>**81925 München (DE)** |

(54) **Apparatus for depositing granular food products on moving elements**

(57)    The invention relates to an apparatus for depositing granular food products (38) onto moving elements (16), and comprises a rotatably supported cylindrical feeder (11) having recessed portions (12) on its outer surface for temporarily accommodating the granular food product (38) to be deposited, conveying means (23) for conveying the moving elements, the conveying means being disposed below the cylindrical feeder the conveying means (23) being movable in the same direction as the direction of rotation of the cylindrical feeder (11), a container for storing the granular food products to be deposited, and having an opening facing the cylindrical feeder element for supplying the granular food products to be deposited to the feeder. A cover member (27) covering a portion of the cylindrical feeder (11) between the container and the conveying means (23) in the direction of rotation of the cylindrical feeder (11) is also provided. The invention also relates to a method for depositing granular food products onto moving elements.

Fig. 1

**Description**

Technical Field

The present invention relates to an apparatus and a method for depositing granular food products having smooth or non-smooth surfaces and shapes on moving elements, for example moulds, in the food industry.

To enhance the taste or the appearance of foods, for example confectionary items, biscuits or chocolate, and/or to decorate these, granular, usually spherically or quasi-spherically shaped products, for example hazelnuts, almonds or cherries, are added to the food products. These additives may be mixed with the basis product or deposited on its surface.

On the one hand, the fabrication process of the respective food products is nowadays automated. This means that moulds for the food products are continually or cyclically moving under defined order. The granular supplements have to be placed into these moving moulds or elements, preferably in an automatic manner, as well.

An apparatus for depositing granular food products on moving elements (for example moulds) serves to place these granular elements onto or into the moving moulds without interrupting or stopping the conveying process of the moulds or elements. Depending on the respective product, the granular food products have to be equally distributed in the moulds.

Related Art

It is well known to use automated devices for continually or cyclically feeding granular food products of different sizes to moving moulds or elements. These devices are configured depending on the product to be supplied and the mould and require an adaptation of their configuration when there is a significant change in the type of product to be supplied or of the mould.

A first device describing an apparatus and a method for distributing granular bulk material of different granular size is described in DE 3426974 C2. The device is intended to supply different amounts of course or very fine granular bulk materials, for example powder, icing sugar, grains or oats to conveying means and elements which are placed thereon. The device comprises a casing being rectangular in a horizontal cross-section and having a perforated bottom portion being adapted to the shape of a delivery roll rotatably driven and positioned inside the container. The delivery roll preferably has a toothed surface. The products to be deposited are fed into the container. Subsequently, the delivery roll is rotated. Thereby the products are conveyed and pressed through the opening in the bottom portion of the container. The conveying means conveying moulds or elements onto which the granular products have to be placed, is disposed below the container.

Another distributing device for cherries, pralines, nuts or other similar products to enhance the taste and appearance of food products and/or to decorate these is disclosed in EP 0476162 B1. The device comprises a vibrating supply means being cylindrical in shape and having helical shaped guidings on the wall which are extended into at least one slide means at the upper end of the supply means. The products to be deposited are conveyed along the helical path on the slides. Preferably, there are three to five slides. Below the slides, vertical conveying tubes are arranged. The food products to be decorated with the quasi-spherical elements (almonds, hazelnuts, etc.) are conveyed along a conveyor disposed below the slides and conveying tubes. By the reciprocating motion of a sliding means the conveying tubes and the slide devices are alternately opened and closed.

Summary of the invention

It is an object of the present invention to provide an apparatus for depositing granular food products on conveyed elements which allows a reliable deposition of the granular products into the moulds or moving elements and is robust and requires low maintenance. It is a further object of the present invention to provide a reliable method for depositing granular food products onto moving elements.

These objects are solved by an apparatus according to claim 1 and a method according to claim 20.

Preferred embodiments are characterized by claims 2 to 19, 21 and 22.

The essential idea of the present invention lies in the fact that a cylindrical feeder conveys granular food products temporarily stored in recessed portions or pockets on the feeder from a storage device to moving moulds or elements on a conveying means by rotation of the feeder. The recessed portions or pockets temporarily accommodate the granular products but do not have to be particularly adapted to the size of the separate granules. In particular, the granule size has only to be chosen such that a minimal diameter of the granules is bigger than half of the diameter of the recessed portion and smaller than the diameter of the recessed portion to ensure reliable transportation. Further, as the granules are placed in separate pockets, no restrictions with respect to stickiness or roughness of the surfaces of the granules are imposed. In particular, nuts can be used as well as sticky products such as candied cherries. Further, as the conveying means conveying the moving element or mould moves in the same direction as the cylindrical feeder, the granules fall into the moulds with a minimal speed and, consequently, with a minimal deviation. Therefore, even small holes of the moulds or moulds filled with liquids, for example liquor, do not cause any problems.

According to a preferred embodiment, the container storing the granular products comprises an adjustable shutter member for adjusting the opening of the container. Such an adjustable shutter and, therefore, opening, provides the possibility to limit the amount of granular products falling out of the opening dependent on the configuration of the moving mould. Therefore, it is possible to simply adjust the opening when changing the granular products. Sticky products, for example products coated with syrup, will pass more slowly out of the container than smooth products not sticking to each other. Therefore, a great amount of excess products which has to be removed in a later step can be avoided.

Preferably, at least one feeding cross-channel is provided between the container and the cylindrical feeder. These cross-channels, preferably being provided in a number corresponding to the recessed portions or pockets in one line on the feeder, guide the granular food products in a smooth manner from the container to the feeder. In particular, this means that the products do not have to be dropped onto the feeder but may be fed to the feeder with a minimum speed when the feeding cross-channels extend almost or completely horizontally. Therefore, even delicate products may be supplied by means of the apparatus.

According to another preferred embodiment the feeding cross-channels are provided with side walls extending at least at their front end substantially along the periphery of the cylindrical feeder. This means that, even in the case the granular product do not immediately enter the feeder when arriving at the front end of the feeding cross-channels, these products are conveyed by the rotation of the feeder and, as they do not leave the feeding cross-channels due to the walls, may enter the pockets or recessed portions on the feeder at a location downstream of the first possible transfer location. Further, using such walls in combination with an adaptation of the cross-channels to the number of pockets or recessed portions in one line on the feeder, it can be ensured that the nuts, almonds etc., do enter the correct pockets. Therefore, even if different granular products have to be delivered to one single moving mould or element, this may be achieved by the use of a plurality of separated cross-channels in which the different granular products are supplied. In this case a plurality of storage devices or a storage device having separate compartments should be used.

Preferably, the width of the feeding cross-channels is substantially the same or slightly larger than the diameter of the granular products to be delivered. This ensures that one product after the other drops into the pockets or recessed portions on the cylindrical feeder. Thereby an excess of granular products which has to be removed is avoided.

According to a further preferred embodiment, the at least one feeding cross-channel is mounted on a vibrating support being driven by a vibrator, for example a pneumatic vibrator. In case any of the granular products should stick together or stick on parts of the feeding cross-channels, these may be loosened by the vibrating motion. Further, using such a vibrator, it is not necessary to provide a steep slope for the feeding cross-channels to ensure that the granular products are properly conveyed. In contrast, the feeding cross-channels may only have a slight inclination to the horizontal, such that the granular products may be delivered to the cylindrical feeder in a position corresponding to about 9 o'clock when the feeder is in use. This also enhances the handling of delicate products as it is not necessary to deliver them at high speed to the rotary feeder.

Preferably, the number of feeding cross-channels corresponds also to the layout of the moving elements. If this is ensured together with the corresponding layout of the recessed portions on the cylindrical feeder, the granular products can be smoothly conveyed from the container to the moulds or moving elements on the conveying means. In particular, different products may be supplied to different portions of the moulds. However, the feeding cross-channels, if a plurality thereof is provided, are preferably connected to each other and with the vibrator, for example by a platelike element such that one single vibrator is sufficient to impart a vibrating motion to all of the channels.

Preferably, the recessed portions on the cylindrical feeder have a layout substantially corresponding to the products to be deposited. This, in particular, concerns the sizes and diameters of the recessed portions, which are also referred to as pockets. As the granular products usually have a spherical or spherical configuration but probably not symmetrical, it must be ensured that the biggest diameter of the products is smaller than a maximal diameter of the moulds. Further, to avoid an undesired movement of the granular products in the recessed portions, the diameter of the recessed portions is preferably smaller than two times the minimal diameter of the granular products. Accordingly, desirably the following condition should be met:

$$2b_{min.} > D > b\ max.,$$

where $D$ is the diameter of the feeder pocket, $b_{min.}$ and $b_{max.}$ the minimal and maximal granule size, respectively, for example, the nut width, length or diameter.

According to a preferred embodiment, the recessed portions on the cylindrical feeder are arranged in groups. Each of these groups respectively corresponds to one mould or element, in which a plurality of granule products is to be deposited. The space on the cylindrical feeder between two of these groups corresponds to the distance between two of the conveyed moulds or elements or, in case of a cyclical motion of the conveying means, to a cycle time. The number of groups is not limited. In particular, the number is chosen according to the mentioned kinematic requirements or constructive considerations. According to a preferred embodiment, the layout of the recessed portions in every group is the same and corresponds to the layout of the holes in the conveyed element.

Preferably, the movement of the cylindrical feeder is synchronized with the movement of the conveying means, for example by a mechanical link between the cylindrical feeder and the conveying means. This ensures that recessed portions and groups of recessed portions always correspond to the dropping position to moulds or holes in the mould.
Therefore, it can be ensured that the granular products do not drop beyond or next to the moulds. A mechanical link between the conveying means and the cylindrical feeder is one example of a reliable and affordable means to ensure the synchronized movement of both elements.

Desirably, the apparatus further comprises a stripping means disposed between the storage container and a leading end of the cover member. This stripping means serves to brush off excess of granule products, such that for each receiving portion in the conveyed elements, one single granule product will be supplied. The stripping means may be, for example, in the form of a rotatably supported brush which brushes off an excess of granule products. Alternatively, curtain like elements may be employed. According to a preferred embodiment, the stripping means is provided inside a housing ensuring that excess products are returned to the storage container or the feeding chambers. Such a housing prevents excess products dropping off the device in an uncontrolled manner.

Preferably, the apparatus comprises further a displacement mechanism for the cover member. The cover member holds the granule products on the rotary feeder against the influence of gravity in a position between substantially 12 o'clock and 6 o'clock. However, as it may sometimes become necessary to inhibit a supply of the granule products to the conveying means or elements being conveyed, a displacement mechanism for the cover ensures that the dropping position of the feeder is closed. Additionally, this displacement of the cover may also be used for a fine adjustment of the dropping opening and, therefore, the time of dropping.

According to another preferred embodiment, the apparatus comprises peripheral grooves aligned with the symmetric axis of the recessed portions and scraping means provided in each of the grooves. This scraping means preferably acts on the granular elements accommodated in the recessed portions of the cylindrical feeder when dropping these onto or into the moulds. Preferably, the depths of the grooves are bigger than the depths of the recessed portions, such that the scraping means goes behind the granular products in the moulds. The scraping means may be carried out in the form of a scrapper having a counterweight part ensuring the return of the scrapper to its starting position. Providing such a scraping means serves for aiding the nuts or other granular products in leaving the recessed portions or pockets on the rotary feeder. In particular, in case a nut, almond, cherry etc., is stuck in the pockets, the scraping means pushes it out from the pocket. In case the depths of the recessed portions are smaller than the depths of the grooves, the scraper is prevented from sticking, for example, in soft granular products which may otherwise happen as the scrapper preferably has a pointed leading edge.

As outlined above, the scraping mean preferably has a return mechanism, for example a counterweight or a spring means.

Description of the figures

In the following, the invention is described in more detail by way of example with reference to the accompanying figures, in which:

   Fig. 1 is a diagram illustrating one exemplary embodiment of the apparatus according to the invention;
   Fig. 2 is a top view of the apparatus of Fig. 1;
   Fig. 3 is an enlarged sectional view of a portion designated by "A" in the apparatus of Fig. 1;
   Fig. 4 is an enlarged sectional view illustrating a portion denoted by "B" of the apparatus in Fig. 1;
   Fig. 5 is an enlarged sectional view illustrating a portion of the apparatus denoted by "C" in Fig. 1;
   Fig. 6 is an enlarged sectional view taken along the line D-D of Fig. 5; and
   Fig. 7 is an enlarged sectional taken along the line E-E of Fig. 4.

Ways for carrying out the invention

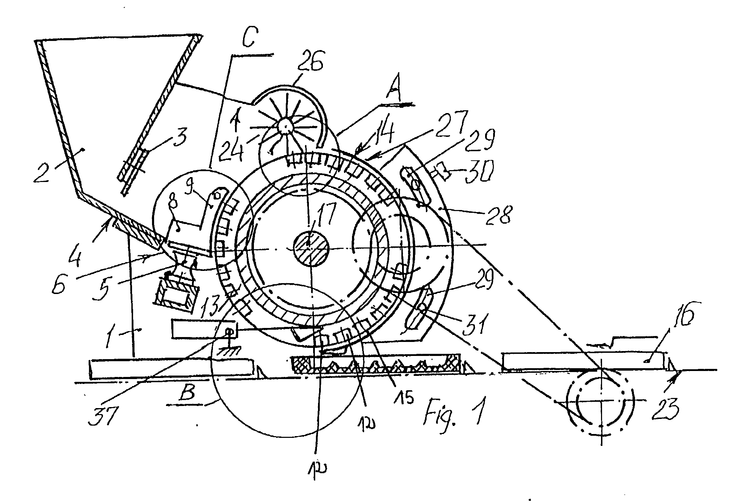

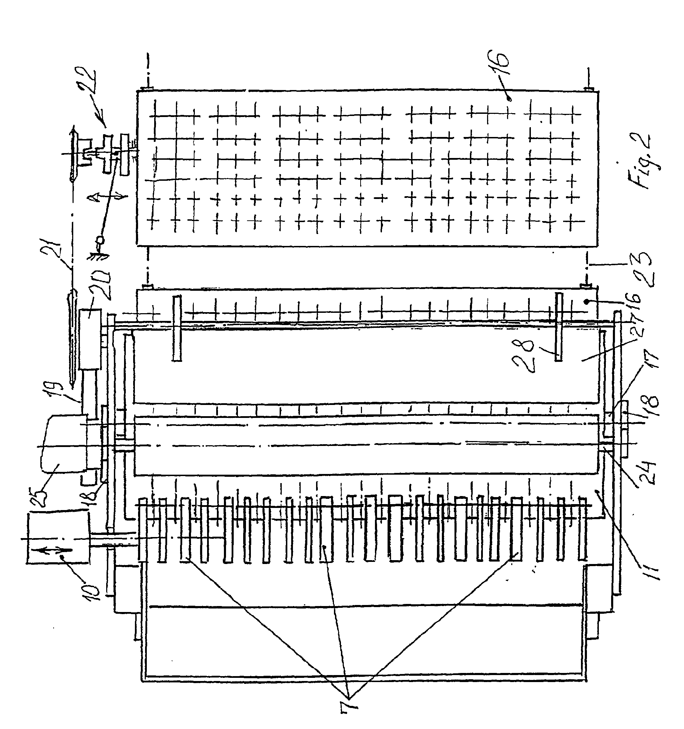

Fig. 1 shows a side view of an exemplary embodiment of the apparatus according to the present invention. The apparatus has a frame 1, onto which a funnel-shaped container 2 and the remaining components of the apparatus are mounted. The container 2 comprises an adjustable opening, the size of which may be enlarged or reduced by means of an adjustable shutter 3. From the lower end portion of the container 2, there extends a sloping surface 4 supporting the granular food products pouring out of the container 2. The sloping surface 4 extends into feeding cross-channels 6. These feeding cross-channels are confined by side walls having sloping parts 8 and vertical parts 9. As can be seen from the figure, the vertical parts 9 are adapted at their front end to the shape of the cylindrical feeder 11.

The feeding cross-channels, of which a plurality may be provided, are movably supported and connected to a vibrator. This vibrator 10 may be, for example, a pneumatical vibrator.

Together with the rotary feeder, the leading end of the supply path for the granular products defines a transfer portion for the granular products and is disposed approximately at the 9 o'clock position of the cylindrical feeder. Therefore, only a small slope is needed for the feeding channels as well as the sloping surface 4.

As can best be seen from Figs. 2, 5 and 6, the plates 7 defining the feeding cross-channels are fixed in such a manner that there is a gap between two adjacent plates which substantially corresponds to the size of the product to be deposited. Further, one single vibrator 10 acts on a vibrating support 5 (see Figs. 1 and 2) such that all feeding cross-channels are simultaneously moved.

Referring again to Fig. 1, the apparatus further comprises a feeder 11 comprising a cylinder element having groups 13, 14, 15 of pockets 12 on its surface. According to the embodiment shown in Fig. 1, three groups 13, 14, 15 of pockets 12 are provided. However, the apparatus is of course not limited to three groups only. It may have any suitable number of groups with one or more pockets 12. The cylindrical feeder 11 is mounted on a shaft 17 which can rotate in bearings 18. A drive (not shown) for driving the cylindrical feeder may be provided. Alternatively, the motion of the cylindrical feeder 11 can be linked to the motion of a conveying means 23 disposed below the granular product supply by means of a mechanical linkage discussed in detail below.

The conveying means 23 carries conveyed elements 16, for example, moulds for chocolate or pralines. The moulds 16 have fixed positions on the chain conveyor 23 and, accordingly, move together with the conveyor discretely or continuously. The positions of the moulds 16 on the conveying means 23 are suitably interrelated to the groups of pockets on the cylindrical feeder 11. The conveying means according to the embodiment shown in Figs. 1 to 7 transports the moulds 16 in a substantially translatoric manner. However, this is not an absolute requirement.

For example, the conveying means for transporting the moulds may comprise circulatory elements.

The device for supplying the granular food products to the moulds 16 further comprises a lid or cover member 27 covering a portion of the cylindrical feeder 11. According to the embodiment shown in Fig. 1, the cover member 27 covers the cylindrical feeder in a portion from about one o'clock to about six o'clock. Naturally, the extension of the cover may vary depending on the overall configuration of the inventive apparatus. The cover 27 is intended to ensure that the granules positioned in the pockets on the rotary feeder do not undesirably fall out of the pockets.

The cover 27 further comprises a displacement mechanism consisting essentially of two semi-arc shaped elements 28 having radial gaps 29. Fastening bars 31 are inserted into the radial gaps. The cover member itself is provided with a fastening bolt 30.

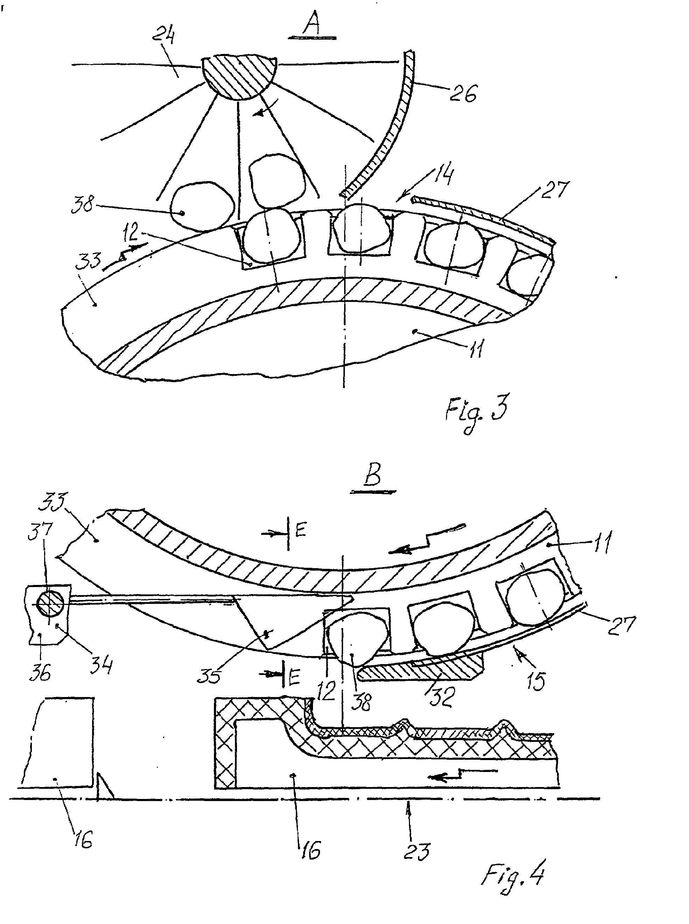

As can best be seen from Fig. 4, the cover member 27 ends at its lower portion with a plate member 32 particularly adapted to smoothly convey the granular food products 38 at the dropping position.

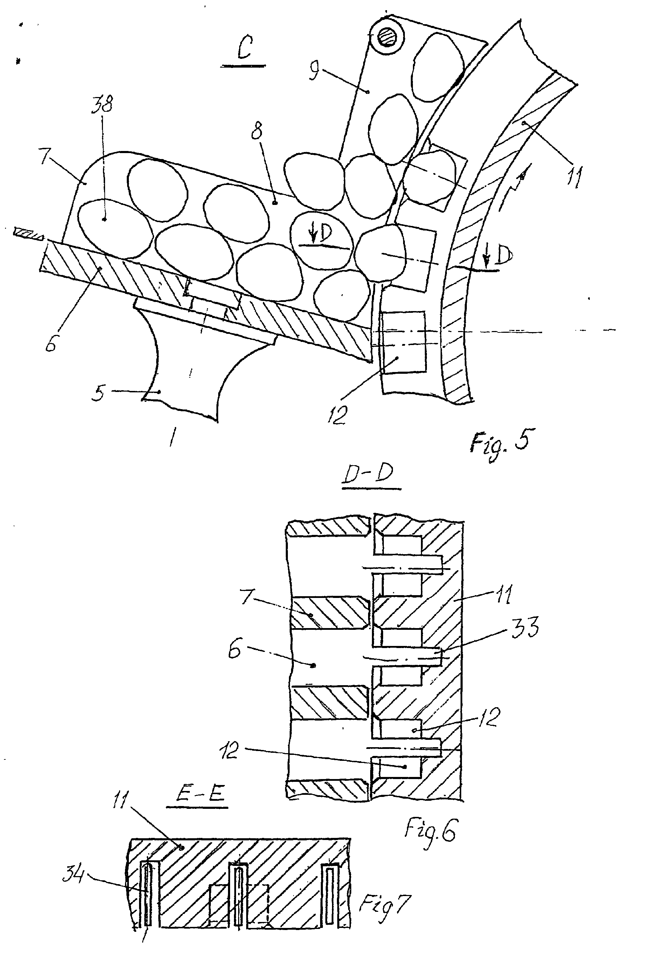

Apart from the recessed portions or pockets 12 for accommodating the granular food products 38, the feeder is provided with circumferential grooves 33 which pass through the symmetric axis of the pockets 12 and are positioned in such a way that every groove 33 passes through the symmetric axis of the cross-channels 6. As can best be seen from Fig. 6, the depth of the grooves 33 is greater than the depth of the recessed portions 12.

As can be seen from Figs. 4 and 7, a scraping means is arranged to extend into and be guided inside each groove 33. The tip end of the scraping means 35, provided as a conical element in this preferred embodiment, acts on the granular food product 38 at a location corresponding to about the six o'clock position of the cylindrical feeder. A counterweight 36 is provided to ensure the return of the scraping means to its starting position. Therefore, the scraping means is rotatably supported on a bar 37.

Denoted with reference number 24 is a brushing means. This brushing means is disposed between the transfer position between the container 2 and the cylindrical feeder 11 and the leading edge of the cover 27. The brushing member itself is also covered by a cover or lid member 26. The brushing member 24, shown as a rotatably supported brush in this preferred embodiment, acts on the surface of the rotary feeder 11. In case the cylindrical feeder 11 rotates clockwise, the brushing means 24 also rotates clockwise. As can be seen from Fig. 2, the brushing means 24 is driven by a drive 25.

According to Fig. 2, the cylindrical feeder 11 is mechanically linked to the chain-conveyor 23. A coupling 22 being fixed to the chain-conveyor and which rotates when the chain-conveyor is moving, can be coupled to a chain drive 21 and toothed wheel 19, 20. Therefore, when the coupling is coupled to the chain drive 21, the cylindrical feeder is kinematically connected to the line through the toothed wheel 19, 20, the chain drive 21 and the automatic coupling 22. Thus, the cylindrical feeder 11 rotates synchronously to the movement of the chain-conveyor 23 such that the horizontal velocities of the chain-conveyor 23 and the cylindrical feeder 11 at about the six o'clock position of the cylindrical feeder 11 coincide regarding direction and speed.

In the following, the operation of this preferred embodiment of the inventive apparatus is described with reference to Figs. 1 to 7.

Firstly, the apparatus is prepared for operation. In particular, the container 2 is filled with the granular food products, for example, nuts 38, almonds or cherries.

Moulds 16 are positioned on the chain-conveyor 23, which is part of a production line (not shown).

Subsequently, the vibrator 10, the drive 25 and the coupling 22 are actuated. Accordingly, the moulds move due to the imposed movement of the entire production line. Through the mechanical linkage, the cylindrical feeder 11 is turned synchronically with the chain-conveyor 23, meaning when the moulds move one step ahead, the rotary feeder 11 in this embodiment turns one third of one rotation. Meanwhile, the nuts 38 or the like supplied from the container 2 pass along the sloping surface 4 into the vibrating cross-channels 6. The vibrating cross-channels 6 are adapted in terms of width to the granular food products to be deposited. When a pocket 12 opens for the next nut 38, the nut automatically falls into the pocket. Due to the rotation of the rotary feeder 11, the nuts 38 are positioned in the vibrating channels 6 formed by the sloping plate 8, vertical plates 9 and the feeder. Some of the granular food products 38 may be drawn by the movement of the feeder 11. However, all pockets 12 or recessed portions on the cylindrical feeder 11 are filled in the nine o'clock to twelve o'clock portion of the rotary feeder.

As the layout of the pockets 12 in the groups substantially corresponds to the layout the holes of the moulds and the products to be deposited, the granular products 38 are reliably conveyed by means of the rotary feeder element. AS the feeder element continues to rotate, all groups of pockets 12 are filled.

The groups of pockets subsequently reach the brushing means 24 (Fig. 3). The brushing means 24 may be driven itself or may be in the form of a flap touching the surface of the rotary feeder. The rotating dosing brush 24 sweeps away the excess of the nuts 38 and returns these to the channels 6.

Depending on the type of product, the specific pocket layout in the groups and/or the shape of the cross feeding channels may be altered. In particular, the layout of the pockets 12 in the groups 13, 14, 15 should substantially correspond to the layout of the recesses in the moulds.

The granular products 38 which are in the pockets 12 of one of the groups 13, 14 or 15 turn through about one third of one entire rotation during one cycle in this preferred embodiment. This means that the granular products 38 in the group 13 move to the group 14, the nuts from group 14 move to the group 15 etc. By way of the cover 27, the nuts, almonds, cherries or the like are prevented in this phase of operation from falling out of the rotary feeder while passing from the 12 o'clock to the 6 o'clock zone of the rotary feeder.

Finally, the nuts reach the zone where the plate 32 of the cover member 27 ends. As it is depicted in Fig. 4, the granular products 38 fall from the pockets 12 into the recesses of the moulds 16. It is to be noted that the horizontal component of movement of the recesses in the moulds 16 and of the pockets of the feeder 11 are effectively equal.

In case a granule 38 is stuck in one of the pockets, the product comes into contact with the conic part 35 of the scraper means 34. Consequently, the nut, almond, cherry or the like is pushed out of the pocket 12. This situation is depicted in Fig. 4. All nuts in the pockets 12 of one group (15 in Fig. 4) subsequently fall down into the mould 16. This transfer from the feeder element to the mould 16 is carried out in one moving cycle. The rest of the same cycle is used for the rotation of the feeder 11 and the transportation of the mould 16 to the non-active zones of the feeder before the cycle begins again at the container.

At the same time, a new mould following the filled one is prepared according to the step described above for a new cycle. As can be seen from Figs. 4 and 5, the transfer from the cross feeding channels 6 to the cylindrical feeder 11 and from the cylindrical feeder 11 to the moving moulds 16 can be carried out smoothly as only a minimal speed of the granular products 38 is required and the transfer height between the cylindrical feeder 11 and the moving moulds can be reduced to a minimum.

The concept of the present invention is to provide a rotary feeder for the transportation of granular products (hazelnuts, almonds, cherries etc.) between a storage device or container and a moving mould or element into which the granular products have to be placed. The velocities of the cylindrical feeder 11 and the moving mould 16 are adapted to each other in the location of transfer, such that the granular products 38 can be smoothly transported from the storage device to the moving mould. As only minimal speeds of the granular products are required, a deviation of the position of depositing the products is also minimal and, therefore, the device can also be used for fillings of pralines etc., when the accurate position of the granular products becomes essential.

**Claims**

1. Apparatus for depositing granular food products (38) onto moving elements (16), comprising

   a rotatably supported cylindrical feeder (11) having recessed portions (12) on its outer surface for temporarily accommodating the granular food products (38) to be deposited;
   conveying means (23) for conveying the moving elements (16), the conveying means being disposed below the cylindrical feeder (11), the conveying means (23) being movable in the same direction as the direction of rotation of the cylindrical feeder (11);
   a container (2) for storing the granular food products (38) to be deposited and having an opening facing the cylindrical feeder (11) for supplying the granular food products to be deposited to the feeder; and
   a cover member (27) covering a circumferential portion of the cylindrical feeder (11) between the container (2) and the conveying means (23) in the direction of rotation of the cylindrical feeder (11).

2. Apparatus according to claim 1, **characterized in that** the container (2) comprises an adjustable shutter member for adjusting the opening of the container (2).

3. Apparatus according to any one of the preceding claims, **characterized in that** the container (2) comprises at least one feeding cross channel (6) extending with a slight inclination from the opening of the container (2) towards the cylindrical feeder (11).

4. Apparatus according to claim 3, **characterized in that** the at least one feeding cross channel (6) comprises side walls extending at their front end substantially along the periphery of the cylindrical feeder (11).

5. Apparatus according to claim 3 or 4, **characterized in that** the feeding cross channels each have a width perpendicular to the feeding direction of the products (38) to the cylindrical feeder (11) which is adapted to substantially correspond to the granular products (38) to be deposited.

6. Apparatus according to any one of claims 3 to 5, **characterized in that** the at least one feeding cross channel is mounted on a vibrating support (5).

7. Apparatus according to any one of claims 3 to 6, **characterized in that** the number of feeding cross channels (6) corresponds to the layout of the moving elements (16).

8. Apparatus according to any one of the preceding claims, **characterized in that** the recessed portions (12) on the cylindrical feeder (11) have a layout corresponding to the products (38) to be deposited.

9. Apparatus according to any one of the preceding claims, **characterized in that** the recessed portions (12) on the cylindrical feeder (11) are arranged in groups (13,14,15).

10. Apparatus according to any one of the preceding claims, **characterized in that** the movement of the cylindrical feeder (11) is synchronized with the movement of the conveying means (23).

11. Apparatus according to any one of the preceding claims, **characterized in** a mechanical link between the cylindrical feeder (11) and the conveying means (23) is provided.

12. Apparatus according to any one of the preceding claims, **characterized in that** the moving elements (16) are moulds for food products.

13. Apparatus according to any one of the preceding claims further comprising a stripping means (24) disposed between the container (2) and a leading end of the cover member (27).

14. Apparatus according to claim 13, **characterized in that** the stripping means (24) comprises a rotatably supported brush.

15. Apparatus according to claim 13 or 14, **characterized in that** the stripping means (24) comprises a housing (26).

16. Apparatus according to any one of the preceding claims, **characterized in that** cover member (27) comprises a displacement mechanism for adjusting the peripheral position of the cover member (27) with respect to the cylindrical feeder (11).

17. Apparatus according to any one of the preceding claims, **characterized in that** the cylindrical feeder (11) comprises peripheral grooves (33) aligned with the symmetric axes of the recessed portions (12) and **in that** the apparatus further comprises a scraping means (34) guided in each of the grooves (33).

18. Apparatus according to claim 17, **characterized in that** the depth of the grooves is greater than the depth of the recessed portions (12).

19. Apparatus according to claim 17 or 18, **characterized in that** the scraping means (34) is rotatably supported and comprises a return mechanism (36).

20. Method for depositing granular food products onto moving elements comprising the steps of:

   (a) supplying the granular food products from a container to recessed portions of a cylindrical feeder in a position located at an upper half of the cylindrical feeder;
   (b) conveying the granular food products in the recessed portions of the cylindrical feeder by rotation of the feeder to a position located at a lower half of the cylindrical feeder substantially vertically above the moving elements; and
   (c) dropping the granular food products onto the moving elements.

21. Method according to claim 20, further comprising the step of loosing the granular food products in the recessed portions by way of a scraping means before dropping them onto the moving elements.

22. Method according to claim 20 or 21, further comprising the step of sweeping away excess of granular products between the steps (a) and (b).

Fig. 1

Fig. 2

Fig. 3

Fig.4

Fig. 5

Fig.6

Fig 7

**European Patent Office**

## EUROPEAN SEARCH REPORT

Application Number

EP 00 11 3093

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DE 22 37 323 A (ITT IND GMBH DEUTSCHE) 8 March 1973 (1973-03-08) | 1-3,8, 10,12 | A21C9/04 A21C9/08 |
| X | * the whole document * | 20 | |
| Y | DE 196 28 214 A (FETT HELMUT) 15 January 1998 (1998-01-15) | 1-3,8, 10,12 | |
| A | * figure 11 * | 6,20 | |
| X | US 5 060 562 A (FLORINDEZ AUGUSTO) 29 October 1991 (1991-10-29) | 20 | |
| A | * the whole document * | 1,3-5,7, 8,10,12 | |
| A | US 2 064 437 A (MARASSO) 15 December 1936 (1936-12-15) * the whole document * | 1,3-5, 17,20,21 | |
| A | EP 0 741 972 A (NESTLE SA) 13 November 1996 (1996-11-13) * the whole document * | 1,8-10, 12 | |
| A | EP 0 879 556 A (BARILLA ALIMENTARE S P A) 25 November 1998 (1998-11-25) * the whole document * | 1,10,12, 20 | **TECHNICAL FIELDS SEARCHED** (Int.Cl.7) A21C |
| A | GB 209 508 A (GALLIMORE) * the whole document * | 1,8,20 | |
| A | EP 0 548 482 A (WERNER & PFLEIDERER) 30 June 1993 (1993-06-30) * the whole document * | 1,13,14 | |
| A | US 3 767 089 A (MC KEE O ET AL) 23 October 1973 (1973-10-23) | | |
| A | GB 2 211 391 A (FARMHOUSE BAKERY PRODUCTS) 5 July 1989 (1989-07-05) | | |

-/--

The present search report has been drawn up for all claims

| Place of search | Date of completion of the search | Examiner |
|---|---|---|
| THE HAGUE | 11 September 2000 | Silvis, H |

EPO FORM 1503 03.82 (P04C01)

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 1 652 325 A (PLETSCHER) 13 December 1927 (1927-12-13) ----- | | |

TECHNICAL FIELDS SEARCHED (Int.Cl.7)

The present search report has been drawn up for all claims

| Place of search | Date of completion of the search | Examiner |
|---|---|---|
| THE HAGUE | 11 September 2000 | Silvis, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 11 3093

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2000

| Patent document cited in search report | | Publication date | Patent family member(s) | | Publication date |
|---|---|---|---|---|---|
| DE 2237323 | A | 08-03-1973 | AT 333684 B | | 10-12-1976 |
| | | | AT 715772 A | | 15-04-1976 |
| | | | BE 788205 A | | 28-02-1973 |
| | | | GB 1350550 A | | 18-04-1974 |
| | | | NL 7211890 A | | 02-03-1973 |
| | | | US 3870199 A | | 11-03-1975 |
| | | | US 3757833 A | | 11-09-1973 |
| DE 19628214 | A | 15-01-1998 | NONE | | |
| US 5060562 | A | 29-10-1991 | NONE | | |
| US 2064437 | A | 15-12-1936 | NONE | | |
| EP 0741972 | A | 13-11-1996 | AU 698707 B | | 05-11-1998 |
| | | | AU 5216696 A | | 21-11-1996 |
| | | | CA 2176054 A | | 10-11-1996 |
| | | | US 5692433 A | | 02-12-1997 |
| | | | US 5820906 A | | 13-10-1998 |
| EP 0879556 | A | 25-11-1998 | IT MI971176 A | | 20-11-1998 |
| | | | JP 11071014 A | | 16-03-1999 |
| | | | US 6105270 A | | 22-08-2000 |
| GB 209508 | A | | NONE | | |
| EP 0548482 | A | 30-06-1993 | DE 4142931 A | | 01-07-1993 |
| | | | AT 126015 T | | 15-08-1995 |
| | | | DE 59203226 D | | 14-09-1995 |
| | | | US 5242698 A | | 07-09-1993 |
| US 3767089 | A | 23-10-1973 | NONE | | |
| GB 2211391 | A | 05-07-1989 | NONE | | |
| US 1652325 | A | 13-12-1927 | NONE | | |

EPO FORM P0459

For more details about this annex : see Official Journal of the European Patent Office, No. 12/82